# FASCICULE DE BREVET EUROPEEN

(11) **EP 1 673 839 B1**
(45) Date de publication et mention de la délivrance du brevet: **14.03.2007**
(21) Numéro de dépôt: 04791492.4
(22) Date de dépôt: 08.10.2004
(51) Int. Cl.: H01S 3/109

(54) **DISPOSITIF LASER A SOLIDE MONOLITHIQUE POMPE PAR DIODE LASER, ET PROCEDE MIS EN OEUVRE DU DISPOSITIF**
LASERDIODENGEPUMPTES MONOLYTHISCHES HALBLEITER-LASERBAUELEMENT UND VERFAHREN ZUR ANWENDUNG DES BAUELEMENTS
LASER DIODE-PUMPED MONOLITHIC SOLID STATE LASER DEVICE AND METHOD FOR APPLICATION OF SAID DEVICE

(30) Priorité: 09.10.2003 FR 0311809
(43) Date de publication de la demande: 28.06.2006
(73) Titulaire: Oxxius SA, 22300 Lannion (FR)
(72) Inventeur: GEORGES, Thierry, F-22700 Perros-Guirec (FR)
(74) Mandataire: Pontet, Bernard
(86) Numéro de dépôt international: PCT/FR2004/002540
(87) Numéro de publication internationale: WO 2005/036703

(56) Documents cités:
- US-A- 3 502 958
- US-A- 4 761 059
- US-A- 4 809 291
- US-A- 5 206 867
- US-A- 5 256 164
- FAN T Y: "SINGLE-AXIAL MODE, INTRACAVITY DOUBLED ND:YAG LASER" IEEE JOURNAL OF QUANTUM ELECTRONICS, IEEE INC. NEW YORK, US, vol. 27, no. 9, 1 septembre 1991 (1991-09-01), pages 2091-2093, XP000234357 ISSN: 0018-9197 cité dans la demande
- BAUMERT J-C ET AL: "HIGH-EFFICIENCY INTRACAVITY FREQUENCY DOUBLING OF A STYRYL-9 DYE LASER WITH KNBO3 CRYSTALS" APPLIED OPTICS, OPTICAL SOCIETY OF AMERICA,WASHINGTON, US, vol. 24, no. 9, 1 mai 1985 (1985-05-01), pages 1299-1301, XP000709425 ISSN: 0003-6935
- DIXON G J ET AL: "EFFICIENT BLUE EMISSION FROM AN INTRACAVITY-DOUBLED 946-NM ND:YAG LASER" OPTICS LETTERS, OPTICAL SOCIETY OF AMERICA, WASHINGTON, US, vol. 13, no. 2, 1 février 1988 (1988-02-01), pages 137-139, XP000710564 ISSN: 0146-9592 cité dans la demande
- LIU L ET AL: "KNBO3 TEMPERATURE-TUNED BLUE LASER" OPTICAL ENGINEERING, SOC. OF PHOTO-OPTICAL INSTRUMENTATION ENGINEERS. BELLINGHAM, US, vol. 38, no. 11, novembre 1999 (1999-11), pages 1789-1793, XP000928186 ISSN: 0091-3286
- MATTHEWS D G ET AL: "BLUE MICROCHIP LASER FABRICATED FROM ND:YAG AND KNBO3" OPTICS LETTERS, OPTICAL SOCIETY OF AMERICA, WASHINGTON, US, vol. 21, no. 3, 1 février 1996 (1996-02-01), pages 198-200, XP000629023 ISSN: 0146-9592 cité dans la demande
- HOLLEMANN G ET AL: "FREQUENCY-STABILIZED DIODE-PUMPED ND:YAG LASER AT 946 NM WITH HARMONICS AT 473 AND 237 NM" OPTICS LETTERS, OPTICAL SOCIETY OF AMERICA, WASHINGTON, US, vol. 19, no. 3, 1 février 1994 (1994-02-01), pages 192-194, XP000424362 ISSN: 0146-9592 cité dans la demande

## Description

La présente invention se rapporte à un dispositif laser à solide monolithique pompé par diode laser, et concerne plus particulièrement le laser à solide doublé intra-cavité monomode. Elle se rapporte également à un procédé mis en oeuvre dans un tel dispositif.

La présente invention trouve une application particulièrement intéressante, mais non exclusive, dans le domaine de la génération de lumière laser bleue ou verte.

L'émission laser d'un faisceau de bonne qualité spatiale et spectrale dans le visible à 473 nm par exemple, à partir d'une diode multimode présente beaucoup d'intérêt pour des applications industrielles et médicales notamment. Cette longueur d'onde, dite harmonique, peut s'obtenir à partir du doublage en fréquence d'une émission laser à une longueur d'onde, dite fondamentale, à 946 nm du grenat d'aluminium et yttrium dopé au néodyme (Nd:YAG).

D'une façon générale, un laser doublé intra-cavité comprend une diode laser pour pomper un laser à solide, tel que le Nd:YAG par exemple, formant un amplificateur à 946 nm. Pour réaliser le doublage, on associe à l'amplificateur un cristal non linéaire convertissant le signal fondamental proche infrarouge en signal visible par doublage fréquentiel ("frequency doubling" en langue anglaise, aussi nommé "second harmonic génération, SHG"). On obtient ainsi une longueur d'onde fondamentale divisée par deux. L'amplificateur et le cristal non linéaire sont contenus dans une cavité dont les deux surfaces extrêmes opposées dans le trajet du faisceau laser sont réflectives pour certaines longueurs d'onde.

Cependant, si l'on s'intéresse à une émission continue, la puissance de l'émission fondamentale est inférieure à la puissance de la diode laser de pompe et le doublage de fréquence est alors très inefficace.

On connaît le brevet américain US 4 809 291, intitulé " Diode pumped laser and doubling to obtain blue light", dans lequel R.L. Byer et T.Y. Fan proposent un doublage intra-cavité pour augmenter la puissance d'une onde fondamentale à 946 nm et ainsi augmenter l'efficacité de doublage.

Dans un article intitulé "Efficient blue emission from an intracavity-doubled 946 nm Nd:YAG laser" publié en 1988 dans la revue Optics Letters (vol. 13, pp. 137-139); Dixon et al. présentent une émission de 5 mW de lumière bleue (473 nm) par un micro-laser à base de Nd:YAG doublé intra-cavité. La concentration du Nd est de 1.1 at.%. L'efficacité de doublage n'est que de 2%.

Le problème principal de ces lasers doublés intra-cavité est la présence de modes axiaux et de polarisation parasites qui réduisent l'efficacité du laser et qui sont à l'origine de fortes fluctuations de puissance. En exemple, Matthews et al., dans un article intitulé "Diode pumping in a blue (473 nm) Nd:YAG/KNb0₃ microchip laser" (CLEO' 96, vol. 9, p. 174) produisent 26.5 mW de lumière bleue avec des fluctuations d'intensité supérieures à 10%.

Plus précisément, le doublage de fréquence intra-cavité induit des pertes sélectives qui sont croissantes avec la puissance de pompe pour l'émission laser dominante. Lorsque l'efficacité de doublage augmente, l'inversion de population moyenne de la cavité doit augmenter pour compenser l'excès de perte. Toutefois, cela permet aux modes adjacents et à l'émission de polarisation orthogonale de commencer à laser. Pour les modes adjacents, cet effet s'ajoute à celui du "hole burning spatial" qui permet déjà aux modes adjacents de laser.

Les différents modes lasant dans la cavité sont couplés dans le milieu amplificateur (compétition pour le gain) et dans le milieu doubleur de fréquence (addition de fréquences). Ces couplages sont non linéaires et participent à une dynamique non linéaire complexe. Cette dernière se traduit par une fluctuation de puissance forte voire chaotique.

Si le doublage de fréquence est de "Type I", les modes de polarisation orthogonale ne subissent pas de doublage de fréquence efficace (absence d'adaptation de phase entre le fondamental et l'harmonique). Ces modes stabilisent l'inversion de population en croissant avec la puissance de pompe. Ils ralentissent l'efficacité de conversion qui a besoin d'une augmentation d'inversion de population pour croître. Seuls des effets de "hole burning spatial" autorisent une légère croissance de l'efficacité de conversion.

Plusieurs méthodes ont été présentées pour rendre le laser monomode ou pour découpler les modes dans le cristal non linéaire. Elles peuvent être rangées dans trois catégories :
a) La première est l'introduction d'un étalon dans la cavité. Cette méthode, divulguée notamment dans le brevet américain US 5,838,713 de Y. Shimoji, pose plusieurs problèmes. En effet, l'étalon induit des pertes dans la cavité, sauf s'il est formé par les faces du YAG et du cristal doubleur. Dans ce dernier cas, il requiert une très grande précision de positionnement (sub-micrométrique) difficile à obtenir de manière industrielle et à stabiliser. Une manière de résoudre ce problème est de contacter optiquement le milieu amplificateur avec le cristal doubleur en incluant un angle sur une partie de la face de contact. Cet angle induit un petit espacement d'air entre les deux matériaux. Cette méthode fragilise le contact et donc l'intégrité d'un laser monolithique et ne permet pas la protection de l'interface par une colle.
b) La seconde catégorie joue sur la polarisation du fondamental. Le milieu amplificateur peut être inséré entre deux lames quart d'onde pour éviter l'effet "hole buming spatial", voir notamment G. Hollemann et al., dans "Frequency-stabilized diode-pumped Nd:YAG laser at 946 nm with harmonics at 473 nm and 237 nm", Opt. Lett. 19, p.192, en février 1994. Un inconvénient de cette méthode est l'introduction de pertes dans la cavité.
   Par doublage de Type I, on entend une réalisation dans laquelle le faisceau laser fondamental se propage sur l'un des axes optiques du cristal (en général l'axe lent) et le faisceau laser harmonique se propage sur l'autre axe optique du cristal, orthogonal au premier. On fait du doublage de type I lorsqu'il est possible de couper le cristal de manière à égaler l'indice de réfraction d'un axe optique à la longueur d'onde fondamentale avec l'indice de réfraction de l'autre axe optique à la longueur d'onde harmonique. C'est le cas du KNbO₃)
   Par doublage de type II, on entend une réalisation dans la quelle le faisceau laser fondamental est présent sur les deux axes et le coefficient de conversion est optimisé lorsque la polarisation du laser fondamental fait un angle de 45° par rapport aux axes optiques.
c) La troisième méthode consiste à réduire la longueur de la cavité. Elle a été proposée par A. Mooradian dans le brevet US 5,256,164 oct. 1993. Pour une largeur de raie d'émission à 946 nm de 1 nm (comparée à 0.6 nm pour la raie à 1.064 µm), la formule de Mooradian impose une longueur de cavité inférieure à 300 µm, incluant le YAG et le KNbO₃. La concentration en Nd dans les microchips publiés ou brevetés à ce jour n'excède pas 1.1 at.%. Cela correspond à une atténuation de 0.85 mm⁻¹ à 808.4 nm, c'est à dire 8.1 % de pompe absorbée par 100 µm d'épaisseur et 15.6% de pompe absorbée par 200 µm. D'autre part, les 100 ou 200 nm de KNbO₃ n'apportent pas une efficacité de conversion suffisante. Ainsi, un laser microchip suivant l'inégalité de Mooradian semble ne pas être en mesure d'émettre plus de quelques mW de bleu avec 1 W de pompe d'une diode laser.

Par ailleurs, on connaît une méthode efficace proposée par T. Y. FAN., "Single-Axial Mode, Intracavity Doubled Nd:YAG Laser", IEEE Journal of Quantum Electronics, vol. 27, 9 sept 1991, pour rendre un laser doublé intra-cavité mono-fréquence. Dans cette méthode, le milieu amplificateur (Nd:YAG) est coupé à l'angle de Brewster par rapport à l'air. Le cristal non linéaire, biréfringent, est attaqué à 45° par le fondamental (doublage de type II). La fenêtre de Brewster induit des pertes importantes à la polarisation orthogonale et l'empêche de laser. Elle induit également des pertes à toute longueur d'onde dont la polarisation a été tournée par le cristal biréfringent. Cette modulation de perte en fonction de la longueur d'onde peut rendre le laser monomode. Cette méthode ne s'applique cependant pas à un doublage de fréquence de Type I car le signal à la fréquence fondamentale est sur l'un des axes optiques du cristal non linéaire. D'autre part, à cause de la double réfraction, il n'est pas possible d'accoler le cristal amplificateur coupé à l'angle de Brewster avec le cristal non linéaire. En effet, la double réfraction introduit des effets de phase qui font que les faisceaux réfléchis par la face externe de la cavité ne se recombinent pas lorsqu'ils retournent dans l'amplificateur.

La présente invention vise à remédier à la plupart des inconvénients précités en proposant un laser à solide doublé intra-cavité qui présente une dimension compacte, offre une grande stabilité de fonctionnement, et autorise des doublages de fréquence de Type I et II. Un autre but de l'invention est de proposer un laser à solide accordable capable de fonctionner en monomode. L'invention a encore pour but un laser à solide puissant quel que soit le niveau de puissance de la diode laser de pompage.

L'invention est définie dans la revendication 1.

On atteint au moins l'un des buts précités avec un dispositif laser comprenant :
- un moyen de pompage optique, de préférence une diode laser,
- un milieu amplificateur excité par un faisceau laser de longueur d'onde fondamentale émis par le moyen de pompage optique, la face de sortie de ce milieu amplificateur étant coupée selon l'angle de Brewster pour ladite longueur d'onde fondamentale, et
- un cristal biréfringent de doublage de fréquence.

Selon l'invention, le dispositif comprend en outre un milieu isotrope intercalé entre la face de sortie du milieu amplificateur et la face d'entrée du cristal biréfringent, le milieu amplificateur et le cristal biréfringent étant solidaires l'un de l'autre de façon à constituer une cavité résonnante monolithique ou composite. De plus, l'axe cristallin "c" du cristal biréfringent fait un angle θ_{c} non nul par rapport à la direction orthogonale de la polarisation de l'onde fondamentale, définie par la surface de sortie taillée a l'angle de Brewster.

Avec ce dispositif selon l'invention, l'interface entre le milieu isotrope et le cristal biréfringent est proche de la normale. Ce milieu isotrope intercalaire permet de limiter les effets de la double réfraction du cristal biréfringent : en effet, lorsque l'angle d'incidence tend vers la normale, l'angle de la double réfraction tend vers zéro. On peut ainsi solidariser le milieu amplificateur avec le cristal biréfringent (le doubleur) de façon à obtenir un composant compact, ce qui n'est pas le cas dans le document de T. Y. Fan de 1991.

La combinaison d'une interface à l'angle de Brewster et d'un cristal biréfringent hors axe permet de sélectionner un unique mode. En effet, l'interface de Brewster induit une perte sélective à la polarisation orthogonale. Seules les longueurs d'ondes pour lesquelles le déphasage dû à la biréfringence est un multiple de 2π conservent la polarisation à faible perte à l'interface de Brewster. En ajustant notamment la longueur du cristal non linéaire, il est possible de ne sélectionner qu'un unique mode dans la bande d'émission. En d'autres termes, l'indice du milieu isotrope et l'angle θ_{c} associés à la longueur de la cavité peuvent être ajustés afin de n'autoriser qu'un seul mode dans la cavité.

Ainsi, même dans le cas d'un doublage de type II, il peut être,judicieux de prendre un angle θ_{c} différent de 45°.

Par ailleurs, lorsque l'efficacité de doublage est forte, il est possible d'augmenter les pertes des modes adjacents en augmentant θ_{c}.

Selon une caractéristique avantageuse de l'invention, la face d'entrée et/ou la face de sortie du cristal biréfringent est coupée selon un léger angle ε par rapport à la normale à la direction de propagation du faisceau laser. Ainsi les faces d'entrée et de sortie ne sont plus tout à fait parallèles. Cette caractéristique est remarquable par le fait que, dans les doublages conventionnels, l'angle ε est toujours égal à zéro afin d'éviter toute double réfraction. Imposer un angle ε non nul va donc à l'encontre des pratiques conventionnelles. En fonction des caractéristiques du dispositif (dimension de la cavité, indice, θ_{c} ,... ) l'homme du métier peut déterminer un angle ε max au delà duquel le spectre de transmission au niveau de la face de Brewster ne présente plus de pic de transmission. A titre d'exemple, ε peut être choisi inférieur ou égal à 1°.

Cet angle ε induit une légère double réfraction dans les deux orientations parallèle et orthogonale. Il peut être introduit dans la dimension parallèle à la polarisation. La légère double réfraction alors introduite dans le trajet du signal peut être compensée par la lentille thermique induite par la pompe dans la mesure où s est faible. Mais, de préférence, ε est introduit dans la dimension orthogonale à la polarisation.

D'une façon générale, cet angle ε permet avantageusement de faire varier la longueur du cristal biréfringent par simple translation de la pompe (et donc du signal). Cette variation de longueur permet d'accorder la fréquence de la cavité.

Selon l'invention, le plan orthogonal à la direction de propagation de l'onde fondamentale peut avantageusement contenir l'axe cristallin "c", et faire un angle par rapport aux axes "a" et "b" du cristal biréfringent de façon à obtenir un accord de phase à la température de fonctionnement entre l'onde fondamentale et l'onde harmonique (onde doublée).

La taille de la cavité n'est plus le seul paramètre modifiable pour obtenir un fonctionnement monomode. Le choix judicieux des milieux, de leur indice de réfraction et de leur dimension, de l'orientation du cristal biréfringent, permet un fonctionnement monomode et stable.

Le milieu amplificateur peut être constitué par le grenat d'aluminium et yttrium (YAG) dopé au néodyme (Nd). Ce cristal peut être de forme cylindrique avec une face d'entrée formant un miroir plan.

Le cristal biréfringent est avantageusement constitué à partir du niobate de potassium (KNbO₃).

Selon une première variante de l'invention, le milieu isotrope est un matériau cristallin constitué à partir du tantalate de potassium (KTaO₃). Les trois milieux sont alors accolés les uns aux autres.

Selon une seconde variante de l'invention, le milieu isotrope est l'air. Dans ce cas, l'état de surface de la face de sortie de l'amplificateur et de la face d'entrée du cristal biréfringent ne requiert pas une pureté excessive.

De préférence, on prendra soin de choisir un milieu isotrope constitué par un cristal isotrope dont l'indice de réfraction est proche, par exemple à 10% près, de l'indice de réfraction du cristal biréfringent. Cela minimise les effets de double réfraction et permet donc une tolérance plus grande sur l'angle d'attaque du signal par rapport à l'interface (autour de la normale).

Suivant un autre aspect de l'invention, il est proposé un procédé dans lequel on fait varier le chemin optique parcouru par le faisceau laser en faisant translater le faisceau laser émis par le moyen de pompage par rapport à la face d'entrée de l'amplificateur. Plus précisément, on déplace le faisceau laser selon un plan dans lequel la distance parcourue par ce faisceau laser dans l'amplificateur varie en fonction de la latitude de la traversée.

D'autres avantages et caractéristiques de l'invention apparaîtront à l'examen de la description détaillée d'un mode de mise en oeuvre nullement limitatif, et des dessins annexés, sur lesquels :
- la figure 1 est une vue en coupe schématique d'un dispositif laser comportant trois cristaux accolés selon l'invention;
- les figures 2 à 7 sont des graphes illustrant le niveau de puissance des différents modes régnant dans la cavité résonante du dispositif de la figure 1; et
- la figure 8 est une vue en coupe schématique d'une variante du dispositif selon l'invention dans lequel le matériau intermédiaire est remplacé par l'air ambiant.

Bien que l'invention n'y soit pas limitée, on va maintenant décrire un dispositif laser monolithique doublé en fréquence en intra-cavité comportant un laser Nd:YAG émettant à 946 nm, doublé intra-cavité à 473 nm avec un cristal de KNbO₃

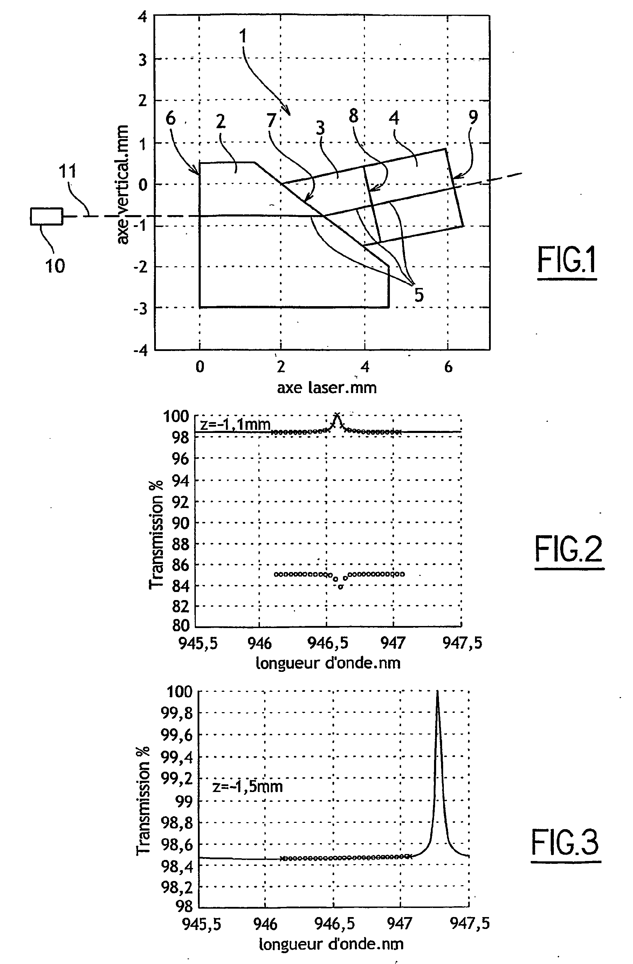

En référence à la figure 1, on voit une diode laser de pompage 10 émettant un faisceau laser 11 à 808 nm vers une cavité 1 composée d'un assemblage de trois cristaux 2, 3 et 4. Le cristal amplificateur 2 est du Nd:YAG. Son indice de réfraction est n₁ = 1.82 à 946 nm. La face d'entrée 6 de ce cristal 2 est traitée de façon à constituer un miroir plan. Sa face de sortie 7 est taillée à l'angle de Brewster calculé à partir de l'indice n₁ et de l'indice n₂ du cristal isotrope 3. Les deux cristaux 2 et 3 sont accolés l'un à l'autre sur une partie de la face 7.

Le cristal isotrope 3 est constitué de tantalate de potassium KTaO₃ d'indice n₂ égale à 2.179 à 946 nm. Sur sa face de sortie 8, on accole un cristal doubleur de fréquence biréfringent 4 constitué de niobate de potassium KNbO₃ dont l'indice de réfraction et le diamètre sont sensiblement identiques à ceux du cristal isotrope 3.

Les deux cristaux 3 et 4 ont leurs axes géométriques colinéaires. Le cristal isotrope 3 est taillé à la face 7 de telle sorte que le faisceau laser 5 sortant du Nd:YAG 2 et dévié par la face 7, traverse les cristaux 3 et 4 parallèlement à leurs axes géométriques.

La face d'entrée 6 du Nd:YAG 2 et la face de sortie 9 du KNbO₃ 4 sont traitées de façon conventionnelle afin de constituer une cavité résonnante. Le faisceau sortant de la face 9 peut être à 946 nm ou à 473 nm.

Le schéma de la figure 1 est basé sur une polarisation verticale du signal à 946 nm dans le Nd:YAG. L'axe vertical est situé dans le plan de la figure, l'axe horizontal étant perpendiculaire à ce plan. L'homme du métier saura aisément adapter ce schéma pour une polarisation linéaire horizontale ou quelconque.

Dans le cristal biréfringent KNbO₃, la face d'entrée 8 contient l'axe c et coupe le plan ab selon un angle ϕ = 32° par rapport à l'axe b de façon à obtenir un accord de phase entre les longueurs d'onde 946 nm et 473 nm à 308 K. L'homme du métier saura modifier cet angle pour une adaptation de phase à d'autres températures. A 946 nm, l'indice de réfraction sur l'axe c est n_{3f} = 2.127 et l'indice de réfraction sur l'axe orthogonal est n₃ₛ = 2.238. La biréfringence est donc caractérisée par Δn₃ = 0.111

L'angle de la face 7 ϕa est l'angle de Brewster entre le YAG et le KTaO₃. Il est déterminé par la relation tan (ϕa) = n₂/n₁. La face 8 est coupée à un angle s de la normale à la direction de propagation du faisceau à 946 nm émis orthogonalement à la face d'entrée 6. ϕb et ϕc sont respectivement les angles des faces 8 et 9, et sont déterminés par ϕb ≅ 2ϕa - π/2 + ε et ϕc ≅ 2ϕa - π/2 + ε1, ε1 ayant des valeurs préférentielles comprises entre ε(1-n₂/n₃ₛ) et ε(1-n₂/n_{3f}). La tolérance sur ϕb est de l'ordre de 1°, elle est limitée par les effets de double réfraction. La tolérance sur ϕc est inférieure à quelques minutes d'angles, car c'est cette dernière face qui referme la cavité.

Encore sur la figure 1, pour "y" = 0, sur l'axe vertical, le signal se propage sur 2 mm dans chacun des trois cristaux 2, 3 et 4. Les distances respectives de propagation dans les trois milieux pour "y" < 0 se déduisent aisément des trois angles ϕa, ϕb et ϕc. La distance optique Lo, produit des distances et des indices se calcule aisément en fonction de "y". L'angle ε est choisi égal à 0.003 rad ou 10' d'angle. Les fréquences optiques pouvant se propager dans la cavité sont proportionnelles à C/2L avec C la vitesse de la lumière dans le vide. Elles sont représentées par des croix et des cercles sur les figures 2 à 7.

Les figures 2 à 7 montrent les pertes induites par la face 7 à l'angle de Brewster lors d'un aller-retour dans la cavité constituée par les trois cristaux 2, 3 et 4 pour un signal se propageant avec une polarisation verticale et horizontale. L'angle de coupe du cristal biréfringent 4, c'est à dire l'angle de l'axe c avec l'horizontal, est θ_{c} = 0.3 rad. Le milieu amplificateur 2 est susceptible d'apporter du gain sur une bande de 1 nm centrée autour de 946.6 nm. Les pertes de l'ensemble des modes amplifiés sont calculées puis reportées sur les figures 2 à 7. Sur la figure 2, les pertes de la polarisation orthogonale sont également représentées (sous forme de cercles). Elles ne sont pas représentées par la suite, car elles sont trop importantes pour permettre une oscillation laser.

La polarisation du signal fondamental est la verticale dans le cas présenté. Si l'axe c était horizontal, les axes optiques seraient horizontaux et verticaux. Le signal fondamental se propagerait alors dans un axe de la biréfringence et sa polarisation ne pourrait plus être tournée. Si l'axe c et donc les axes de biréfringence sont tournés comme dans le cas présent, le fondamental n'est plus dans les axes de biréfringence et sa polarisation est donc tournée lors de la propagation dans le cristal. La sélection de mode par rotation de polarisation peut alors jouer.

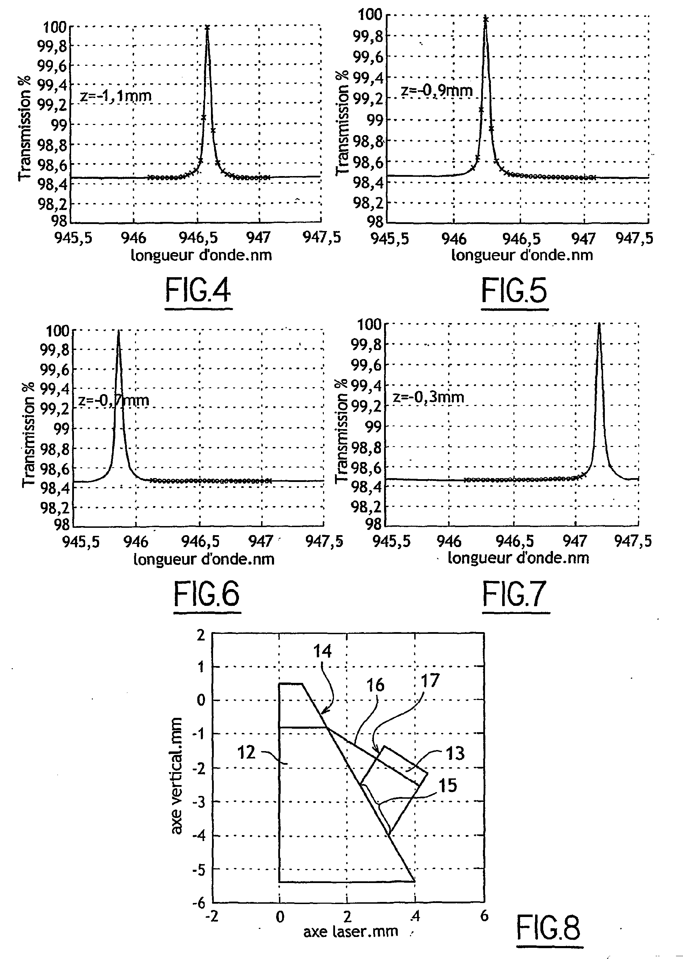

La position verticale "y" du faisceau laser est variée sur les figures 3 à 7. Lorsque "y" remonte de -1.4 mm à - 0.8 mm, l'ensemble des longueurs d'onde de la bande d'émission peut être sélectionné successivement. Nous voyons sur les figures 4 et 5 que le choix judicieux de n₂, de la longueur du cristal 4 biréfringent KNbO₃ et de θ_{c} permettent de ne sélectionner qu'un unique mode. Le faible rapport n₂/n₁, permet notamment une faible largeur du pic de transmission, rendant le filtre très sélectif. L'angle θ_{c} peut être augmenté pour induire plus de pertes sur les modes adjacents. Il suffit d'un déplacement vertical de 1.2 mm pour retrouver la même sélection de mode (voir sur les figures 3 et 7). Le laser est donc monomode et accordable par une simple translation des cristaux par rapport à la diode laser.

Sur la figure 8 est représentée une variante préférentielle du dispositif selon l'invention dans lequel le milieu isotrope est constitué par l'air.

Le dispositif de pompage n'est pas représenté.

La face de sortie 14 du laser Nd:YAG 12 est taillée selon l'angle de Brewster. Une partie supérieure de cette face 14 est destinée au passage du faisceau laser à 946 nm. Sur une partie inférieure de la face 14, on accole un cristal biréfringent 13 à base de KNbO₃. Ce dernier est taillé de telle sorte que le faisceau laser 16 sortant du Nd:YAG et ayant traversé l'air, atteint la face d'entrée 17 de ce cristal 13. Dans le trajet du faisceau laser, aucun matériau n'est disposé entre la face de sortie 14 du laser Nd:YAG et la face d'entrée 17 du cristal biréfringent 13. L'avantage d'une telle variante est une exigence moindre quant à l'état des surfaces sur la zone d'encollage 15.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif laser à solide monolithique comprenant :
- un moyen de pompage optique (10),
- un milieu amplificateur (2) excité par un faisceau laser (11) de longueur d'onde fondamentale émis par le moyen de pompage optique, la face de sortie (7) de ce milieu amplificateur étant coupée selon l'angle de Brewster pour ladite longueur d'onde fondamentale, et
- un cristal biréfringent (4) de doublage de fréquence;
**caractérisé**
- **en ce qu'**il comprend en outre un milieu isotrope (3) intercalé entre la face de sortie (7) du milieu amplificateur et la face d'entrée (8) du cristal biréfringent, le milieu amplificateur (2) et le cristal biréfringent (4) étant solidaires l'un de l'autre de façon à constituer une cavité résonnante monolithique; et
- **en ce que** l'axe cristallin "c" du cristal biréfringent fait un angle θ_{c} non nul par rapport à la direction orthogonale de la polarisation de l'onde fondamentale, définie par la surface de sortie (7) taillée a' l'angle de Brewster.

2. Dispositif selon la revendication 1, **caractérisé en ce que** la face d'entrée (8) du cristal biréfringent est coupée selon un léger angle ε par rapport à la normale à la direction de propagation du faisceau laser (5).

3. Dispositif selon la revendication 1 ou 2, **caractérisé en ce que** la face de sortie (9) du cristal biréfringent est coupée selon un léger angle ε par rapport à la normale à la direction de propagation du faisceau laser (5).

4. Dispositif selon la revendication 2 ou 3, **caractérisé en ce que** l'angle ε est inférieur ou égal à un degré.

5. Dispositif selon l'une quelconque des revendications précédentes, **caractérisé en ce que** le plan orthogonal à la direction de propagation de l'onde fondamentale contient l'axe cristallin "c", ce plan faisant un angle par rapport aux axes "a" et "b" du cristal biréfringent de façon à obtenir un accord de phase à la température de fonctionnement entre l'onde fondamentale et l'onde harmonique.

6. Dispositif selon l'une quelconque des revendications précédentes, **caractérisé en ce que** le milieu amplificateur (2) est constitué par le grenat d'aluminium et yttrium YAG dopé au néodyme Nd.

7. Dispositif selon la revendication 6, **caractérisé en ce que** le milieu amplificateur (2) est un Nd:YAG cylindrique dont la face d'entrée constitue un miroir plan.

8. Dispositif selon l'une quelconque des revendications précédentes, **caractérisé en ce que** le moyen de pompage (10) est une diode laser.

9. Dispositif selon l'une quelconque des revendications précédentes, **caractérisé en ce que** le cristal biréfringent (4) est constitué à partir du niobate de potassium KNbO₃.

10. Dispositif selon l'une quelconque des revendications précédentes, **caractérisé en ce que** le milieu isotrope est l'air.

11. Dispositif selon l'une quelconque des revendications 1 à 9, **caractérisé en ce que** le milieu isotrope est constitué à partir du tantalate de potassium KTaO₃.

12. Dispositif selon l'une quelconque des revendications 1 à 9, **caractérisé en ce que** le milieu isotrope est constitué par un cristal isotrope dont l'indice de réfraction est proche, à dix pourcent près, de l'indice de réfraction du cristal biréfringent.

13. Procédé mis en oeuvre dans un dispositif laser selon l'une quelconque des revendications précédentes, **caractérisé en ce qu'**on fait varier le chemin optique parcouru par le faisceau laser en faisant translater le faisceau laser émis par le moyen de pompage par rapport à la face d'entrée de l'amplificateur.

## Claims

1. A monolithic solid-state laser device comprising:
- an optical pumping means (10),
- an amplifying medium (2) excited by a laser beam (11) with a fundamental wavelength emitted by the optical pumping means, the output face (7) of this amplifying medium being cut according to the Brewster angle for said fundamental wavelength, and
- a birefringent crystal (4) for frequency doubling;
**characterized**
- **in that** it also comprises an isotropic medium (3) inserted between the output face (7) of the amplifying medium and the input face (8) of the birefringent crystal, the amplifying medium (2) and the birefringent crystal (4) being firmly attached to each other so as to constitute a monolithic resonant cavity; and
- **in that** the crystalline axis "c" of the birefringent crystal forms an angle θ_{c} which is not zero with respect to the orthogonal direction of the polarization of the fundamental wave, defined by the output surface which is cut at Brewster angle.

2. Device according to claim 1, **characterized in that** the input face (8) of the birefringent crystal is cut according to a slight angle ε with respect to the normal to the direction of propagation of the laser beam (5).

3. Device according to claim 1 or 2, **characterized in that** the output face (9) of the birefringent crystal is cut according to a slight angle ε with respect to the normal to the direction of propagation of the laser beam (5).

4. Device according to claim 2 or 3, **characterized in that** the angle ε is less than or equal to one degree.

5. Device according to any one of the preceding claims, **characterized in that** the plane orthogonal to the direction of propagation of the fundamental wave contains the crystalline axis "c", this plane forming an angle with respect to the "a" and "b" axes of the birefringent crystal so as to obtain a phase matching at the operating temperature between the fundamental wave and the harmonic wave.

6. Device according to any one of the preceding claims, **characterized in that** the amplifying medium (2) is constituted by yttrium aluminium garnet YAG doped with neodymium Nd.

7. Device according to claim 6, **characterized in that** the amplifying medium (2) is a cylindrical Nd: YAG the input face of which constitutes a plane mirror.

8. Device according to any one of the preceding claims, **characterized in that** the pumping means (10) is a laser diode.

9. Device according to any one of the preceding claims, **characterized in that** the birefringent crystal (4) is made from potassium niobate KNbO₃.

10. Device according to any one of the preceding claims, **characterized in that** the isotropic medium is the air.

11. Device according to any one of claims 1 to 9, **characterized in that** the isotropic medium is made from potassium tantalate KTaO₃.

12. Device according to any one of claims 1 to 9, **characterized in that** the isotropic medium is constituted by an isotropic crystal the refractive index of which is close to, within 10% of, the refractive index of the birefringent crystal.

13. Method used in a laser device according to any one of the preceding claims, **characterized in that** the optical path length covered by the laser beam is varied by translating the laser beam emitted by the pumping means with respect to the input face of the amplifier.

## Patentansprüche

1. Monolithische Festkörperlaservorrichtung, umfassend:
- ein optisches Pumpmittel (10),
- ein Verstärkungsmedium (2), das durch ein Laserbündel (11) mit Grundwellenlänge erregt wird, das von dem optischen Pumpmittel emittiert wird, wobei die Austrittsfläche (7) dieses Verstärkungsmediums im Brewsterwinkel bei dieser Grundwellenlänge geschnitten ist, und
- einen doppeltbrechenden Kristall (4) zur Frequenzverdopplung,
**dadurch gekennzeichnet,**
- **dass** sie außerdem ein isotropes Medium (3) umfasst, das zwischen die Austrittsfläche (7) des Verstärkungsmediums und die Eintrittsfläche (8) des doppeltbrechenden Kristalls eingesetzt ist, wobei das Verstärkungsmedium (2) und der doppeltbrechende Kristall (4) mit einander fest verbunden sind, so dass sie einen monolithischen Resonanzhohlraum bilden, und
- **dass** die Kristallachse "c" des doppeltbrechenden Kristalls einen Winkel θ_{c} von nicht null bezüglich der orthogonalen Richtung der Polarisation der Grundwelle bildet, die durch die im Brewsterwinkel geschnittene Austrittsfläche (7) definiert wird.

2. Vorrichtung nach Anspruch 1, **dadurch gekennzeichnet, dass** die Eintrittsfläche (8) des doppeltbrechenden Kristalls in einem leichten Winkel ε bezüglich der Normalen auf die Fortpflanzungsrichtung des Laserbündels (5) geschnitten ist.

3. Vorrichtung nach Anspruch 1 oder 2, **dadurch gekennzeichnet, dass** die Austrittsfläche (9) des doppeltbrechenden Kristalls in einem leichten Winkel ε bezüglich der Normalen auf die Fortpflanzungsrichtung des Laserbündels (5) geschnitten ist.

4. Vorrichtung nach Anspruch 2 oder 3, **dadurch gekennzeichnet, dass** der Winkel ε kleiner als oder gleich einem Grad ist.

5. Vorrichtung nach einem der vorhergehenden Ansprüche, **dadurch gekennzeichnet, dass** die zur Fortpflanzungsrichtung der Grundwelle orthogonale Ebene die Kristallachse "c" enthält, wobei diese Ebene einen Winkel bezüglich der Achsen "a" und "b" des doppeltbrechenden Kristalls bildet, so dass man eine Phasenabstimmung bei der Betriebstemperatur zwischen der Grundwelle und der Oberwelle erhält.

6. Vorrichtung nach einem der vorhergehenden Ansprüche, **dadurch gekennzeichnet, dass** das Verstärkungsmedium (2) aus mit Neodyn Nd dotiertem Yttrium-Aluminium-Granat YAG besteht.

7. Vorrichtung nach Anspruch 6, **dadurch gekennzeichnet, dass** das Verstärkungsmedium (2) ein zylindrisches Nd:YAG ist, dessen Eintrittsfläche einen Planspiegel bildet.

8. Vorrichtung nach einem der vorhergehenden Ansprüche, **dadurch gekennzeichnet, dass** das Pumpmittel (10) eine Laserdiode ist.

9. Vorrichtung nach einem der vorhergehenden Ansprüche, **dadurch gekennzeichnet, dass** der doppeltbrechende Kristall (4) aus Kaliumniobat KnbO₃ besteht.

10. Vorrichtung nach einem der vorhergehenden Ansprüche, **dadurch gekennzeichnet, dass** das isotrope Medium Luft ist.

11. Vorrichtung nach einem der Ansprüche 1 bis 9, **dadurch gekennzeichnet, dass** das isotrope Medium aus Kaliumtantalat KTaO₃ besteht.

12. Vorrichtung nach einem der Ansprüche 1 bis 9, **dadurch gekennzeichnet, dass** das isotrope Medium aus einem isotropen Kristall besteht, dessen Brechungsindex auf zehn Prozent genau dem Brechungsindex des doppeltbrechenden Kristalls nahe ist.

13. Verfahren, das in einer Laservorrichtung nach einem der vorhergehenden Ansprüche durchgeführt wird, **dadurch gekennzeichnet, dass** man den von dem Laserbündel durchlaufenen optischen Weg sich ändern lässt, indem man das von dem Pumpmittel emittierte Laserbündel bezüglich der Eintrittsfläche des Verstärkers eine Parallelverschiebung ausführen lässt.
